# EUROPEAN PATENT SPECIFICATION

(11) **EP 1 512 581 B1**
(45) Date of publication and mention of the grant of the patent: **25.03.2009**
(21) Application number: 03255568.2
(22) Date of filing: 06.09.2003
(51) Int. Cl.: B60R 7/04

(54) **A vehicle seat**
Fahrzeugsitz
Siège de véhicule

(43) Date of publication of application: 09.03.2005
(73) Proprietor: Ford Global Technologies, LLC, Dearborn, MI 48126 (US)
(72) Inventor: Griffiths, Dean, Chelmsford, Essex, CM2 6GY (GB); Gerhardt, Torsten, London, N22 7UL (GB); White, Stephen J., Fairfield Road, London (GB); Judah, Samuel, Essex, IG9 6HS (GB); Hanrahan, Peter M., Essex, SS5 6BS (GB); Walker, Lee, London, E1 1HH (GB); Sierra, Kerry, Wimbledon, SW 19 1SX (GB); Purdie, James, Essex (GB); Gregory, Jonathan, Essex, CO3 4DA (GB); Hamilton, Hayden, Portland, OR 97219 (US); Agius, Alicia, Bournemouth, BH11 9UB (GB)
(74) Representative: Grunfeld, David Peter

(56) References cited:
- DE-A- 19 735 098
- DE-U- 9 412 066
- FR-A- 2 783 217
- US-A- 3 309 135
- US-A- 5 908 218
- US-B- 6 161 896
- PATENT ABSTRACTS OF JAPAN vol. 1997, no. 10, 31 October 1997 (1997-10-31) & JP 09 150679 A (KANTO AUTO WORKS LTD), 10 June 1997 (1997-06-10)
- PATENT ABSTRACTS OF JAPAN vol. 1996, no. 02, 29 February 1996 (1996-02-29) & JP 07 277082 A (ARACO CORP), 24 October 1995 (1995-10-24)
- PATENT ABSTRACTS OF JAPAN vol. 1998, no. 06, 30 April 1998 (1998-04-30) & JP 10 035364 A (SHOWA AIRCRAFT IND CO LTD), 10 February 1998 (1998-02-10)

## Description

This invention relates to vehicle seats. In particular it relates to a vehicle seat which retains items placed on the seat while the vehicle is in motion (sse, for example, DE 197 35 098 A, corresponding to the preamble of claim 1).

Many car drivers tend to 'dump' loose personal items on the front passenger seat when there is no passenger present, rather than stow them in specific storage areas like the glovebox. Such items typically include anything the driver wishes to be easily accessible during or at the end of the journey, such as wallets, mobile phones, CDs, MP3 players, small bags, food, cigarettes, PDAs, work documents etc. Although this is convenient, such loose items tend to fall off the seat during firm braking or cornering, with the result that the items are no longer easily accessible. This can (i) be inconvenient for the driver when he/she wishes to access the items, (ii) be dangerous should the driver try to access such items while driving the vehicle, and (iii) cause damage to sensitive or fragile items.

Seats with storage compartments underneath the squab are known. These may be accessed by means of tilting, flipping or removable squabs. However, such compartments do not allow ready access to items stored therein while driving, and there remains a need for a means for retaining loose items placed on a seat.

According to the present invention, there is provided a vehicle seat having the features set forth in claim 1.

Further features of the invention are disclosed in the dependent claims.

Preferably, the edge may be raised relative to squab.

Preferably, the edge may be up to 50mm higher than the squab in its displaced position.

Suitably, friction retains the edge and squab in their relative positions.

According to the invention, the outer part of the squab may be hinged at the back of the seat relative to the inner part, such that the outer part may be raised relative to the inner part to form a lip which extends across the front and sides of the inner part. In an alternative not forming part of the present invention, the outer part of the squab may move by means of a linkage mechanism such that the outer part is raised relative to the inner part to form a lip of substantially even height extending across the front and sides of the inner part of the squab.

The invention will now be further described, by way of example, with reference to the accompanying drawings, in which:
Figure 1 is a perspective view of a seat in accordance with the invention having its edge in an undisplaced position relative to the squab;
Figure 2 is a perspective view of the seat shown in Fig. 1 having its edge in a displaced position relative to the squab;
Figure 3 is a perspective view of the above-mentioned alternative not forming part of the present invention; and
Figures 4a and 4b are schematic views of the hinge arrangement used in the seat shown in Fig. 3.

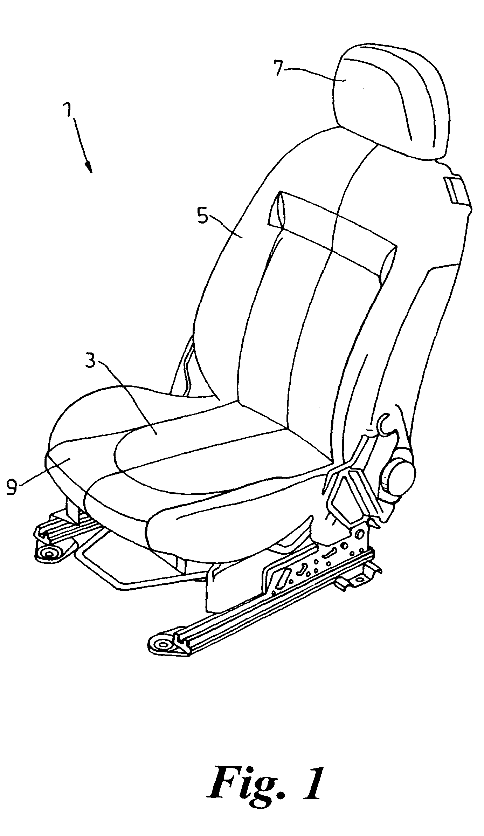

A conventional car seat 1 comprises a squab 3 for sitting on, a back 5 and a headrest 7 as shown in Fig. 1. Such seats are conventionally mounted within a vehicle such that an occupant faces in the direction of travel with the squab 3 being forward of the seat back 5 in relation to the usual direction of motion of the vehicle. The terms 'front' and 'back' are used herein to indicate forward and rearward positions respectively on a conventionally mounted seat in relation to the usual direction of motion.

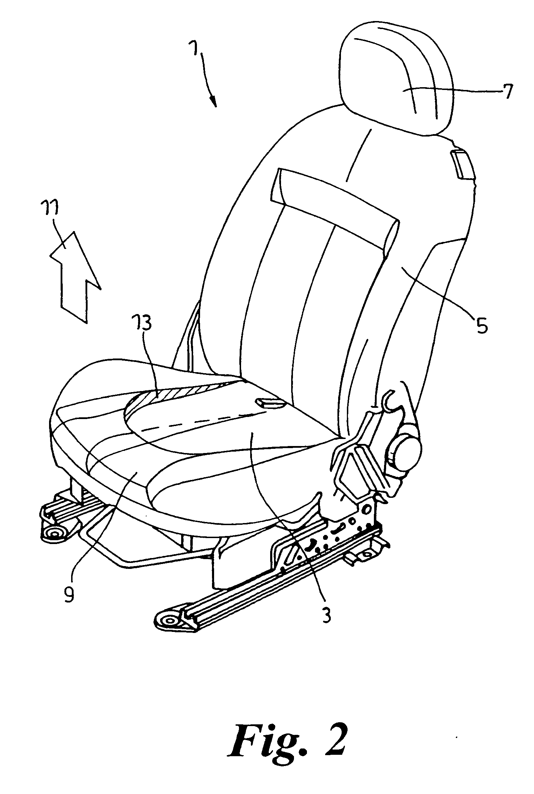

In addition to the features of a conventional seat, the seat shown in Figs. 1 and 2 further comprises a two-part squab having an inner part 3 and an edge or outer part 9. The inner part 3 is static and mounted on a seat pan (not shown) as per a conventional car seat. The outer part 9 is mounted on a separate seat pan which is hinged at its back edge. This enables the front edge of the outer part 9 to be raised by lifting the outer part 9 at its front edge relative to the hinged back edge and the inner part 3, to form a raised wall or lip 13 which extends partially round the inner part 3 of the squab across the front and sides as shown in Fig. 2. The front edge of the outer part may be raised to form a lip 13 approximately 50mm in height relative to the inner part 3 at its front edge. Friction between the inner and outer parts retains the outer part in its raised position until such time as it is pushed down again.

If the seat is not to be used by a passenger for a journey, the driver may deposit any personal items he/she wishes to be easily accessible during or at the end of the journey on the passenger seat squab. He/she then lifts the outer part 9 of the squab at its front edge as indicated by arrow 11 to form a raised wall or lip 13 which extends across the front and sides of the inner part 3 of the squab and surrounds the deposited items. The driver may then embark on his/her journey. Tests have shown that a lip of up to 50mm in height relative to the inner part 3 of the squab is sufficient to prevent personal items placed on the seat from falling into the passenger footwell or into the gaps either side of the seat during firm braking and cornering.

Should a passenger wish to use the seat, any items placed on the seat may be removed and the outer part 9 of the squab simply pushed back down to its lowered position, either by hand or by the action of the passenger sitting on the seat.

Although in the seat described herein, the outer part of the squab may be raised relative to the static inner part, it will be clear that as an alternative the inner part of the squab could be lowered relative to a static outer part, or indeed both parts could be movable to create the wall round the squab.

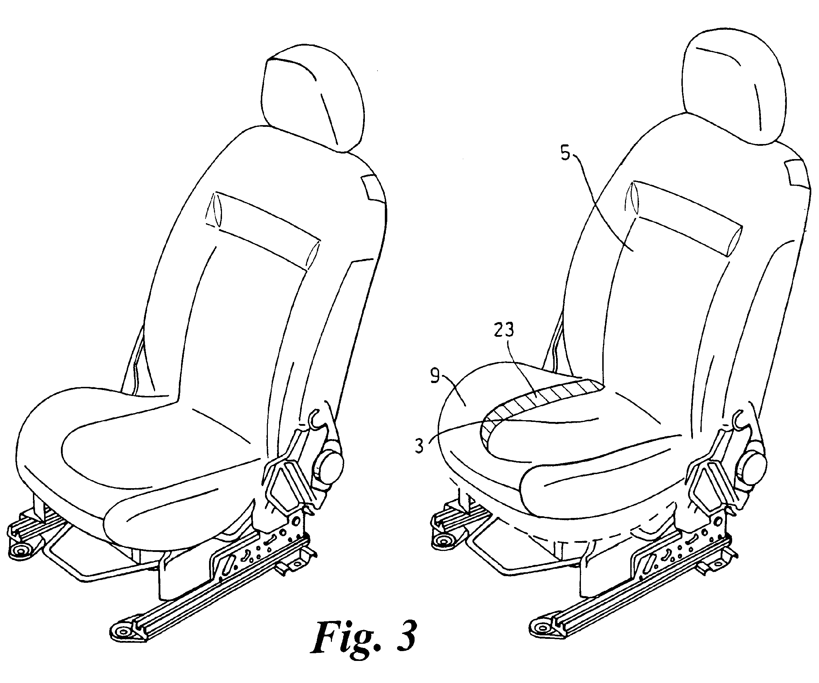

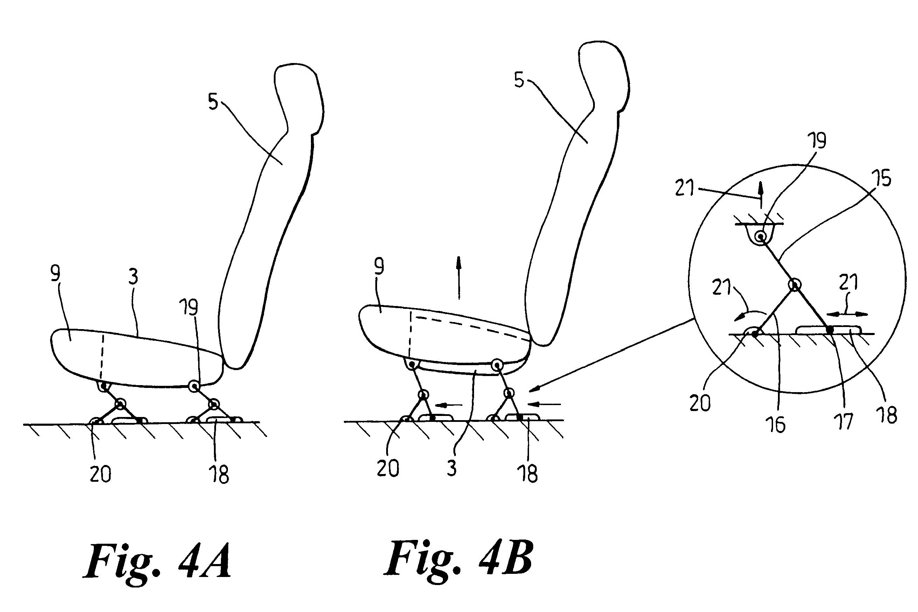

It will also be clear that instead of a hinge arrangement for the outer part of the squab just at the back of the seat, an alternative not forming part of the present invention might include a linkage mechanism which enables the edge to be raised at the back of the seat as well as the front. This would have the advantage of providing a raised lip of substantially even height round the inner part of the squab, as shown in Fig. 3. Such a linkage mechanism is shown in more detail in Figs. 4a and 4b, and comprises four parallel linkages, two on either side of the seat towards its front and back (only one side of the seat is shown in the figures). Each linkage comprises a primary strut 15 and a secondary strut 16. The primary strut 15 is hinged at its upper end 19 to the outer part 9 of the squab while its lower end 17 is free to slide back and forth along a rail 18. The secondary strut 16 is hinged at its lower end 20 at a position just in front of the rail 18, and at its upper end to a mid-point along the primary strut 15. The inner part 3 of the squab is statically attached to the seat base (not shown). Fig. 4a shows the outer part 9 of the squab in a lowered position suitable for occupancy by a passenger.

If the seat is not to be used by a passenger, the outer part 9 of the squab may be raised by lifting it such that the secondary struts 16 pivot about their lower hinges 20 while the lower ends 17 of the primary struts 15 slide forward in rails 18, and the upper ends 19 of the primary struts 15 move straight up as indicated by arrows 21 in the detailed view of the linkage shown in Fig. 4b, until it reaches its raised position as shown in Fig. 4b, while the inner part 3 of the squab remains unmoved. In its raised position, the outer part 9 of the squab forms a raised lip 23 of substantially even height surrounding sides and front of the inner part 3 of the squab to prevent personal items placed on the seat from falling into the passenger footwell or into the gaps either side of the seat during firm braking and cornering.

The outer part 9 of the squab may be lowered simply by pushing it downwards such that it returns to its lowered position.

Instead of friction between the inner and outer parts of the squab to retain the respective parts in their displaced positions, it will be clear that alternative mechanisms may be used. For example, a simple ratchet mechanism underneath the squab may be used to prevent the parts from moving under the influence of vibrations. Alternatively, a spring-loaded mechanism with a catch and release button may be used to raise/lower and retain the outer or inner parts in this position. A further alternative would be to operate the outer or inner part of the squab electrically by means of a motor, switch and appropriate gearing in the same way as other electric seat adjustments are made. If the outer part of the squab were operated in this way, the gearing could include a slip device to allow for the outer part of the squab to be pushed down so as not to require powering down before it could be sat on.

## Claims

1. A vehicle seat (1) comprising a squab (3) for sitting on, the seat (1) further comprising an edge (9), the squab (3) and/or edge (9) being movable relative to each other between a first position in which the edge is not substantially higher than the squab and a second position in which the edge (9) is higher than the squab such that the edge (9) forms a wall at least partially round the upper surface of the squab (3) to retain items placed on the seat (1) while the vehicle is in motion, **characterised in that** the squab (3) is a two-part squab having an outer part (9) and an inner part (3), the outer part (9) forming the edge and being hinged at the back of the seat relative to the inner part (3), such that the outer part (9) may be raised relative to the inner part (3) to form a lip (13) which extends across the front and sides of the inner part (3).

2. A vehicle seat (1) according to claim 1, **characterised in that** the edge (9) may be raised relative to squab (3).

3. A vehicle seat (1) according to claim 1 or 2, **characterised in that,** when displaced, the edge (9) may be up to 50mm higher than the squab (3).

4. A vehicle seat (1) according to any preceding claim, **characterised in that** friction retains the edge (9) and squab (3) in their relative positions.

5. A vehicle seat (1) according to any one of claims 1 to 3, wherein the edge (9) and squab (3) are relatively movable by means of a ratchet, a spring-loaded, or electric mechanism.

6. A car comprising a seat according to any preceding claim.

## Patentansprüche

1. Fahrzeugsitz (1) mit einem Sitzteil (3) zum Sitzen darauf, wobei der Sitz (1) weiterhin einen Rand (9) umfasst, wobei das Sitzteil (3) und/oder der Rand (9) bezüglich einander zwischen einer ersten Position, in der der Rand nicht wesentlich höher als das Sitzteil ist, und einer zweiten Position, in der der Rand (9) höher als das Sitzteil ist, so dass der Rand (9) eine Wand zumindest teilweise um die Oberseite des Sitzteils (3) herum bildet, um auf dem Sitz (1) gelegte Objekte festzuhalten, während das Fahrzeug in Bewegung ist, beweglich ist, **dadurch gekennzeichnet, dass** das Sitzteil (3) ein zweitteiliges Sitzteil mit einem äußeren Teil (9) und einem inneren Teil (3) ist, wobei der äußere Teil (9) den Rand bildet und an der Rückenlehne des Sitzes bezüglich des inneren Teils (3) angelenkt ist, so dass der äußere Teil (9) bezüglich des inneren Teils (3) angehoben werden kann, um eine Lippe (13) zu bilden, die sich über die Vorderseite und Seiten des inneren Teils (3) erstreckt.

2. Fahrzeugsitz (1) nach Anspruch 1, **dadurch gekennzeichnet, dass** der Rand (9) bezüglich des Sitzteils (3) angehoben werden kann.

3. Fahrzeugsitz (1) nach Anspruch 1 oder 2, **dadurch gekennzeichnet, dass** der Rand (9) im verschobenen Zustand bis zu 50 mm höher sein kann als das Sitzteil (3).

4. Fahrzeugsitz (1) nach einem der vorhergehenden Ansprüche, **dadurch gekennzeichnet, dass** Reibung den Rand (9) und das Sitzteil (3) in ihren relativen Positionen hält.

5. Fahrzeugsitz (1) nach einem der Ansprüche 1 bis 3, wobei der Rand (9) und das Sitzteil (3) mittels eines Sperrklinken-, eines federbelasteten oder elektrischen Mechanismus bezüglich einander beweglich sind.

6. Auto mit einem Sitz nach einem der vorhergehenden Ansprüche.

## Revendications

1. Siège de véhicule (1) comprenant un coussin (3) pour s'asseoir dessus, le siège (1) comprenant en outre un bord (9), le coussin (3) et/ou le bord (9) pouvant se déplacer l'un par rapport à l'autre entre une première position dans laquelle le bord n'est pas substantiellement plus haut que le coussin et une deuxième position dans laquelle le bord (9) est plus haut que le coussin, de telle sorte que le bord (9) forme une paroi au moins en partie autour de la surface supérieure du coussin (3) pour retenir des articles placés sur le siège (1) tandis que le véhicule se déplace, **caractérisé en ce que** le coussin (3) est un coussin en deux parties ayant une partie extérieure (9) et une partie intérieure (3), la partie extérieure (9) formant le bord et étant articulée à l'arrière du siège par rapport à la partie intérieure (3), de telle sorte que la partie extérieure (9) puisse être relevée par rapport à la partie intérieure (3) pour former une lèvre (13) qui s'étend en travers de l'avant et des côtés de la partie intérieure (3).

2. Siège de véhicule (1) selon la revendication 1, **caractérisé en ce que** le bord (9) peut être relevé par rapport au coussin (3).

3. Siège de véhicule (1) selon la revendication 1 ou 2, **caractérisé en ce que**, lorsqu'il est déplacé, le bord (9) peut être jusqu'à 50 mm plus haut que le coussin (3).

4. Siège de véhicule (1) selon l'une quelconque des revendications précédentes, **caractérisé en ce que** le bord (9) et le coussin (3) sont retenus dans leurs positions relatives par friction.

5. Siège de véhicule (1) selon l'une quelconque des revendications 1 à 3, dans lequel le bord (9) et le coussin (3) peuvent se déplacer l'un par rapport à l'autre au moyen d'un mécanisme à rochet, chargé à ressort ou électrique.

6. Automobile comprenant un siège selon l'une quelconque des revendications précédentes.
